# EUROPEAN PATENT APPLICATION

(11) **EP 3 903 992 A1**
(43) Date of publication of application: **03.11.2021**
(21) Application number: 19933003.6
(22) Date of filing: 13.12.2019
(51) Int. Cl.: B23K 26/342, B23K 26/04, B23K 26/21, B29C 64/153, B29C 64/209, B33Y 10/00, B33Y 30/00

(54) **SURFACE PROCESSING DEVICE AND METHOD, AND 3D LAYERING APPARATUS**

(30) Priority: 11.06.2019 JP 2019108957
(71) Applicant: Mitsubishi Heavy Industries Machine Tool Co., Ltd., Ritto-shi, Shiga 520-3080 (JP); Technology Research Association For Future Additive Manufacturing, Tokyo, 101-0044 (JP)
(72) Inventor: NIITANI, Haruhiko, Ritto-shi, Shiga 520-3080 (JP); WAKANA, Tomohiro, Ritto-shi, Shiga 520-3080 (JP)
(74) Representative: Studio Torta S.p.A.
(86) International application number: PCT/JP2019/049047
(87) International publication number: WO 2020/250464

(57) **Abstract**

A surface processing device, a surface processing method, and a three-dimensional deposition device are provided. Included are: a powder passage (43) serving as a powder supply unit, which supplies a powder (P) toward a working surface (91) of an object (90) to be processed; and a laser path (44) serving as a light irradiation unit, which irradiates the powder P before reaching the object (90) to be processed with a light beam (L). An irradiation position of the light beam (L) and an injection position of the powder (P) on the working surface (91) are offset.

## Description

### Field

The present disclosure relates to a surface processing device and method that add a material to an object to be processed, and a three-dimensional deposition device including the surface processing device and used to manufacture a three-dimensional object by deposition. Background

As a technology of manufacturing a three-dimensional object, there is known a deposition shaping technology of manufacturing a three-dimensional object by irradiating a metallic powder material with a light beam. As the deposition shaping technology, for example, there is one disclosed in Patent Literature 1. The technology disclosed in Patent Literature 1 is a technology of forming a sintered layer by irradiating a powder layer formed of a metallic powder material with a light beam and manufacturing a three-dimensional object, in which a plurality of sintered layers are integrally deposited, by repeating this process.

### Citation List

### Patent Literature

Patent Literature 1: Japanese Patent Application Laid-open No. 2015-196264

### Summary

### Technical Problem

Incidentally, there is a desire to adjust the surface roughness of an object to be processed by using the deposition shaping technology. In the deposition shaping technology, the focal position of a light beam is set near the surface of the object to be processed and a metallic powder material is injected to the focal position of the light beam. By so doing, the metallic powder material is melted and solidified on the surface of the object to be processed, so that a formed layer is formed. On the other hand, for example, in medical parts such as an artificial joint that require surface roughness, in the case of adjusting the surface roughness of an object to be processed, it is thought that the focal position of a light beam is set to be separated from the surface of the object to be processed by a predetermined distance and a metallic powder material is injected to the focal position of the light beam separated from the surface of the object to be processed. By so doing, the metallic powder material that is not completely melted adheres to the surface of the object to be processed and is solidified, so that the surface roughness of the object to be processed increases. However, in such a case, the light beam heats the metallic powder material at the focal position and then is applied to a processed portion of the object to be processed. Therefore, there is a problem in that thermal influence on the processed portion of the object to be processed increases, resulting in a decrease in the thermal deformation and strength of the object to be processed.

The present disclosure has been made to solve the problems described above and an object of the present disclosure is to provide a surface processing device and method, and a three-dimensional deposition device, which add a material to an object to be processed by suppressing thermal influence on a working surface of the object to be processed.

### Solution to Problem

To achieve the objective described above, a surface processing device of the present disclosure adds a material to an object to be processed, the surface processing device comprising: a powder supply unit that supplies a powder material toward a working surface of the object to be processed; and a light irradiation unit that irradiates the powder material before reaching the object to be processed with a light beam, wherein an irradiation position of the light beam and an injection position of the powder material on the working surface are offset.

Therefore, the powder supply unit supplies the powder material toward the working surface of the object to be processed, and the light irradiation unit irradiates the powder material before reaching the object to be processed with the light beam. At this time, the irradiation position of the light beam and the injection position of the powder material on the working surface are offset. As a consequence, a processed part of the object to be processed is not irradiated with the light beam, and a material can be added to the object to be processed by suppressing thermal influence on the working surface of the object to be processed.

In the surface processing device of the present disclosure, the light irradiation unit solidifies the powder material semi-melted by the light beam, on the working surface of the object to be processed.

Therefore, the powder supply unit supplies the powder material toward the working surface of the object to be processed, and the light irradiation unit irradiates the powder material before reaching the object to be processed with the light beam. By so doing, the powder material semi-melted by the light beam is solidified on the working surface of the object to be processed, and a material can be added to the object to be processed by suppressing thermal influence on the working surface of the object to be processed.

In the surface processing device of the present disclosure, the powder supply unit supplies the powder material toward a focal point of the light beam emitted from the light irradiation unit, and the focal point is separated from the working surface by a predetermined distance.

Therefore, the powder supply unit supplies the powder material toward the focal point of the light beam emitted from the light irradiation unit, so that the powder material can be properly semi-melted by the light beam, and the semi-melted powder material can adhere to and be solidified on the working surface of the object to be processed.

In the surface processing device of the present disclosure, the powder supply unit supplies the powder material along a direction of gravity.

Therefore, the powder supply unit supplies the powder material along the direction of gravity, so that the powder material semi-melted by the light beam can adhere to a predetermined position on the working surface of the object to be processed, and the processing accuracy and surface roughness can be improved.

In the surface processing device of the present disclosure, the light irradiation unit emits the light beam toward a front side in a processing direction at an inclination angle of an acute angle with respect to the working surface of the object to be processed.

Therefore, the light irradiation unit emits the light beam to the working surface of the object to be processed at an irradiation angle of an acute angle, not a right angle, so that the light beam is easily reflected from the working surface of the object to be processed and it is possible to reduce thermal influence on the working surface of the object to be processed.

A surface processing method of the present disclosure is adding a material to an object to be processed, the surface processing method comprising: a step of supplying a powder material toward a working surface of the object to be processed; a step of irradiating the powder material before reaching the object to be processed with a light beam; and a step of offsetting an irradiation position of the light beam and an injection position of the powder material on the working surface.

Therefore, a processed part of the object to be processed is not irradiated with the light beam, so that it is possible to satisfactorily adjust the surface roughness of the object to be processed by suppressing thermal influence on the working surface of the object to be processed.

A three-dimensional deposition device of the present disclosure forms a three-dimensional object by depositing a formed layer on an object to be processed, the three-dimensional deposition device comprising: a powder supply unit that supplies a powder material toward a working surface of the object to be processed; and a light irradiation unit that irradiates the powder material with a light beam and forms the formed layer by sintering or melting and solidifying at least a part of the powder material irradiated with the light beam, wherein the powder supply unit includes a first powder passage that supplies the powder material toward an arrival position of the light beam on the working surface of the object to be processed, and a second powder passage that supplies the powder material toward the light beam before reaching the object to be processed, and the light irradiation unit is able to emit the light beam toward a front side in a processing direction through the powder material before reaching the object to be processed.

Therefore, when the powder supply unit supplies the powder material toward the working surface of the object to be processed by the first powder passages, and the light irradiation unit emits the light beam to the arrival position of the powder material on the working surface of the object to be processed, it is possible to form the formed layer by sintering or melting and solidifying at least a part of the powder material irradiated with the light beam. On the other hand, when the powder supply unit supplies the powder material toward the light beam before reaching the object to be processed by the second powder passage, the powder material irradiated with the light beam is semi-melted, and the semi-melted powder material adheres to and is solidified on the working surface of the object to be processed, so that it is possible to form a surface roughness adjusting layer. As a consequence, the processed part of the object to be processed is not irradiated with the light beam, so that a material can be added to the object to be processed by suppressing thermal influence on the working surface of the object to be processed.

In the three-dimensional deposition device of the present disclosure, the powder supply unit includes a passage switching unit for switching between the first powder passage and the second powder passage.

Therefore, it is possible to change the injection position of the powder material by switching the first powder passages and the second powder passage by the passage switching units, and to easily select a three-dimensional deposition process and a surface processing process.

In the three-dimensional deposition device of the present disclosure, an irradiation angle of the light beam emitted from the light irradiation unit to the working surface of the object to be processed is variable.

Therefore, it is possible to easily change the angle of the light beam emitted to the working surface of the object to be processed, and the light beam is reflected from the working surface of the object to be processed, so that it is possible to reduce thermal influence on the working surface of the object to be processed. Advantageous Effects of Invention

According to a surface processing device and method, and a three-dimensional deposition device of the present disclosure, it is possible to add a material to an object to be processed by suppressing thermal influence on a working surface of the object to be processed.

### Brief Description of Drawings

FIG. 1 is a schematic view illustrating a three-dimensional deposition device of the present embodiment.
FIG. 2 is a longitudinal sectional view illustrating an example of a front end of a deposition head.
FIG. 3 is a horizontal sectional view illustrating an example of the front end of the deposition head.
FIG. 4 is a schematic view illustrating a configuration of a control device.
FIG. 5 is an explanatory diagram illustrating a method of manufacturing a three-dimensional object by the three-dimensional device.
FIG. 6 is an explanatory diagram illustrating a method of adjusting surface roughness by the three-dimensional device.

### Description of Embodiments

Hereinafter, a preferred embodiment of the disclosure will be described in detail with reference to the accompanying drawings. Further, the disclosure is not limited to the embodiment. Then, when there are a plurality of embodiments, a combination of the embodiments may be employed.

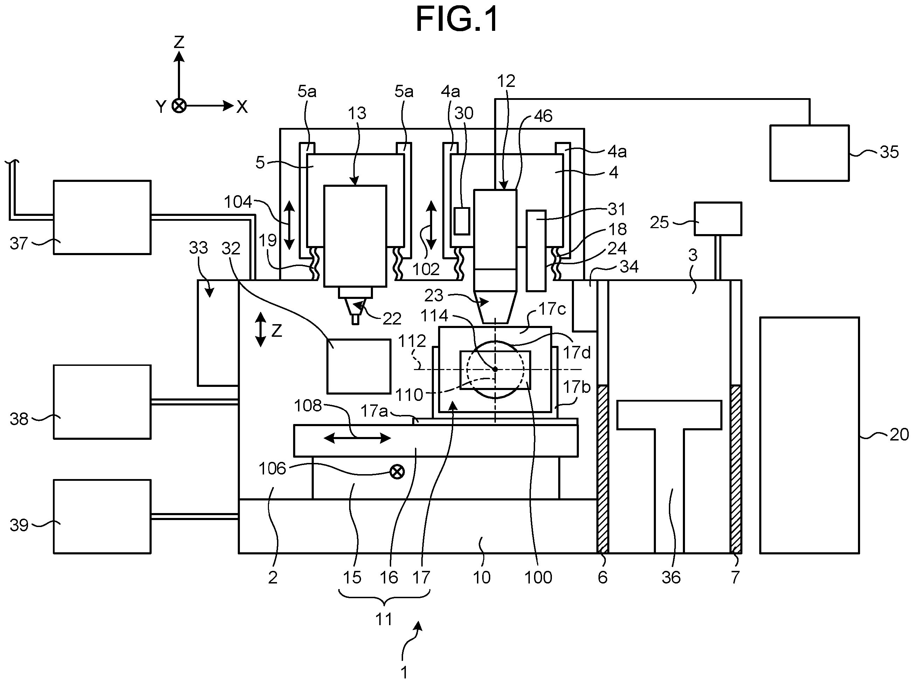

FIG. 1 is a schematic diagram illustrating a three-dimensional deposition device 1 of an embodiment. Here, in the embodiment, one direction within a horizontal plane will be set as an X-axis direction, a direction orthogonal to the X-axis direction within the horizontal plane will be set as a Y-axis direction, and a direction (a vertical direction) orthogonal to each of the X-axis direction and the Y-axis direction will be set as a Z-axis direction.

As illustrated in FIG. 1, a three-dimensional deposition device 1 is a device that manufactures a three-dimensional object on a base unit 100. The base unit 100 is a base member on which the three-dimensional object is formed. The base unit 100 is carried to a predetermined position of the three-dimensional deposition device 1, so that the three-dimensional object is formed on a working surface thereof. The base unit 100 of the embodiment is a plate-shaped member. Further, the base unit 100 is not limited thereto. As the base unit 100, a base member of the three-dimensional object may be used or a member adding the three-dimensional object may be used. A member corresponding to a component or a product, by forming the three-dimensional object at a predetermined position, may be used as the base unit 100.

The three-dimensional deposition device 1 includes a three-dimensional deposition chamber 2, a spare chamber 3, a deposition head accommodation chamber 4, a machining unit accommodation chamber 5, a bed 10, a table unit 11, a deposition head 12, a machining unit 13, a control device 20, a shape measurement unit 30, a heating head 31, a device measurement unit 32, a tool exchange unit 33, a nozzle exchange unit 34, a powder introduction unit 35, a base movement unit 36, an air discharge unit 37, a gas introduction unit 38, and a powder collection unit 39.

The three-dimensional deposition chamber 2 is a casing (a chamber) in which a part other than a designed communication part such as a connection pipe is sealed from the outside. Additionally, the designed communication part is provided with a valve that switches a sealed state and an opened state. If necessary, the three-dimensional deposition chamber 2 can be sealed. The three-dimensional deposition chamber 2 includes therein the bed 10, the table unit 11, the deposition head 12, a part of the machining unit 13, a part of the heating head 31, the device measurement unit 32, the tool exchange unit 33, and the nozzle exchange unit 34.

The spare chamber 3 is provided adjacent to the three-dimensional deposition chamber 2. In the spare chamber 3, a part other than a designed communication part such as a connection pipe is sealed from the outside. The spare chamber 3 is formed as a decompression chamber which connects the outside and the three-dimensional deposition chamber 2 to each other. The base movement unit 36 is provided inside the spare chamber 3. Here, the spare chamber 3 is formed so that, for example, an airtight door 6 is provided at the connection part with the three-dimensional deposition chamber 2. Further, the spare chamber 3 is connected to the outside by an airtight door 7. Further, the spare chamber 3 is provided with an air discharge unit 25 which discharges air from the spare chamber 3. When the door 7 is opened, a necessary member can be carried into the spare chamber 3 from the outside. Further, when the door 6 is opened, a member can be carried between the spare chamber 3 and the three-dimensional deposition chamber 2.

The deposition head accommodation chamber 4 is provided on an upper surface of the three-dimensional deposition chamber 2 in the Z-axis direction. The deposition head accommodation chamber 4 is supported by Z-axis slide units 4a to be movable in the Z-axis direction (direction indicated by an arrow 102) with respect to the three-dimensional deposition chamber 2. A lower surface of the deposition head accommodation chamber 4 in the Z-axis direction is connected to the three-dimensional deposition chamber 2 by a bellows 18. The bellows 18 connects the lower surface of the deposition head accommodation chamber 4 in the Z-axis direction to the three-dimensional deposition chamber 2 so that the lower surface of the deposition head accommodation chamber 4 in the Z-axis direction is formed as a part of the three-dimensional deposition chamber 2. Furthermore, the three-dimensional deposition chamber 2 is formed so that an opening is formed in an area surrounded by the bellows 18. A space surrounded by the lower surface of the deposition head accommodation chamber 4 in the Z-axis direction and the bellows 18 is connected to the three-dimensional deposition chamber 2 and is sealed along with the three-dimensional deposition chamber 2. The deposition head accommodation chamber 4 supports the deposition head 12, the shape measurement unit 30, and the heating head 31. Furthermore, a part including a nozzle 23 of the deposition head 12 and a part including a front end 24 of the heating head 31 protrude toward the three-dimensional deposition chamber 2 from the lower surface of the deposition head accommodation chamber 4 in the Z-axis direction.

When the deposition head accommodation chamber 4 moves in the Z-axis direction by the Z-axis slide units 4a, the deposition head 12, the shape measurement unit 30, and the heating head 31 held therein are moved in the Z-axis direction. Furthermore, the deposition head accommodation chamber 4 is connected to the three-dimensional deposition chamber 2 through the bellows 18, so that the bellows 18 is deformed in accordance with the movement in the Z-axis direction and the sealed state between the three-dimensional deposition chamber 2 and the deposition head accommodation chamber 4 can be maintained.

The machining unit accommodation chamber 5 is provided at the upper face of the three-dimensional deposition chamber 2 in the Z-axis direction. Further, the machining unit accommodation chamber 5 is disposed adjacent to the deposition head accommodation chamber 4. The machining unit accommodation chamber 5 is supported by Z-axis slide units 5a to be movable in the Z-axis direction (a direction of an arrow 104) with respect to the three-dimensional deposition chamber 2. A lower face of the machining unit accommodation chamber 5 in the Z-axis direction is connected to the three-dimensional deposition chamber 2 by a bellows 19. The bellows 19 connects the lower face of the machining unit accommodation chamber 5 in the Z-axis direction to the three-dimensional deposition chamber 2 so that the lower face of the machining unit accommodation chamber 5 in the Z-axis direction is formed as a part of the three-dimensional deposition chamber 2. Further, the three-dimensional deposition chamber 2 is formed so that an opening is formed in an area surrounded by the bellows 19. A space surrounded by the lower face of the machining unit accommodation chamber 5 in the Z-axis direction and the bellows 19 is connected to the three-dimensional deposition chamber 2 and is sealed along with the three-dimensional deposition chamber 2. The machining unit accommodation chamber 5 supports the machining unit 13. Further, the machining unit accommodation chamber 5 is formed so that a part including a tool 22 of the machining unit 13 protrudes toward the three-dimensional deposition chamber 2 from the lower face in the Z-axis direction.

When the machining unit accommodation chamber 5 moves in the Z-axis direction by the Z-axis slide units 5a, the machining unit 13 held therein is moved in the Z-axis direction. Furthermore, the machining unit accommodation chamber 5 is connected to the three-dimensional deposition chamber 2 through the bellows 19, so that the bellows 19 is deformed in accordance with the movement in the Z-axis direction and the sealed state between the three-dimensional deposition chamber 2 and the machining unit accommodation chamber 5 can be maintained.

The bed 10 is provided at a bottom in the three-dimensional deposition chamber 2 in the Z-axis direction. The bed 10 supports the table unit 11. Various wirings, pipes, and driving assemblies are disposed on the bed 10.

The table unit 11 is disposed on an upper face of the bed 10 and supports the base unit 100. The table unit 11 includes a Y-axis slide unit 15, an X-axis slide unit 16, and a rotation table unit 17. The table unit 11 has the base unit 100 attached thereto and moves the base unit 100 on the bed 10.

The Y-axis slide unit 15 moves the X-axis slide unit 16 in the Y-axis direction (a direction of an arrow 106) with respect to the bed 10. The X-axis slide unit 16 is fixed to a member corresponding to a movable part of the Y-axis slide unit 15. The X-axis slide unit 16 moves the rotation table unit 17 in the X-axis direction (a direction of an arrow 108) with respect to the Y-axis slide unit 15. The rotation table unit 17 is fixed to a member corresponding to a movable part of the X-axis slide unit 16 and supports the base unit 100. The rotation table unit 17 is, for example, an inclined circular table and includes a fixing base 17a, a rotation table 17b, an inclination table 17c, and a rotation table 17d. The fixing base 17a is fixed to a member corresponding to a movable part of the X-axis slide unit 16. The rotation table 17b is supported by the fixing base 17a. The rotation table 17b rotates about a rotation shaft 110, which is a rotation axis, and is parallel to the Z-axis direction. The inclination table 17c is supported by the rotation table 17b. The inclination table 17c rotates about a rotation shaft 112, which is an axis, and is orthogonal to a face supporting the rotation table 17b. The rotation table 17d is supported by the inclination table 17c. The rotation table 17d rotates about a rotation shaft 114, which is an axis, and is orthogonal to a surface supporting the inclination table 17c. The rotation table 17d is used to fix the base unit 100.

In this way, the rotation table unit 17 can rotate the base unit 100 about three orthogonal axes by rotating the components thereof about the rotation shafts 110, 112, and 114. The table unit 11 moves the base unit 100 fixed to the rotation table unit 17 in the Y-axis direction and the X-axis direction by the Y-axis slide unit 15 and the X-axis slide unit 16. Further, the table unit 11 rotates the base unit 100 about three orthogonal axes by rotating the components thereof about the rotation shafts 110, 112, and 114 by the rotation table unit 17. The table unit 11 may further move the base unit 100 in the Z-axis direction.

The deposition head 12 injects a powder material toward the base unit 100, irradiates the powder material injected onto the base unit with a laser beam (light beam) to melt the powder, and solidifies the melted powder on the base unit 100 to form a formed layer. The powder which is introduced into the deposition head 12 is powder which is used as a raw material of the three-dimensional object. In the embodiment, for example, a metal material such as iron, copper, aluminum, or titanium can be used as the powder. As the powder, a material such as ceramic other than the metal material may be used. The deposition head 12 is provided at a position facing the upper face of the bed 10 in the Z-axis direction and faces the table unit 11. A lower part of the deposition head 12 in the Z-axis direction is provided with the nozzle 23. The nozzle 23 is attached to a main body 46 of the deposition head 12.

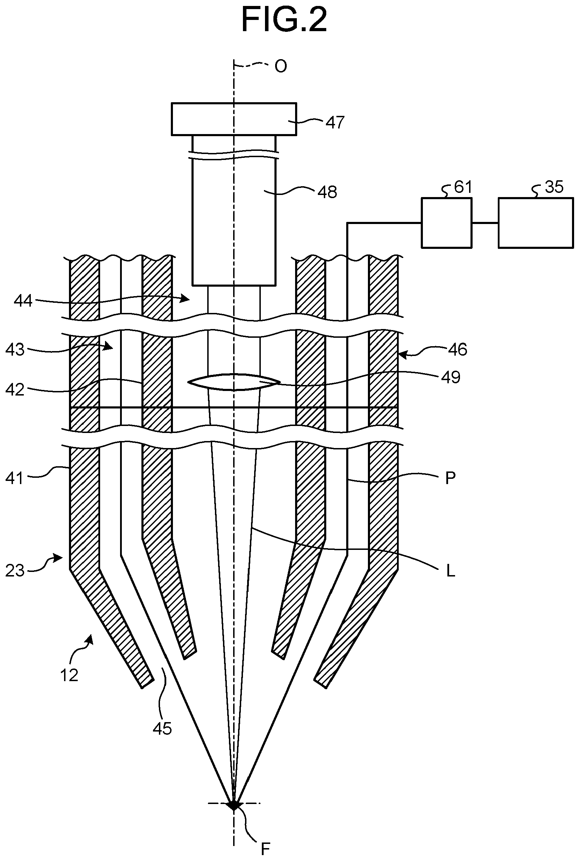

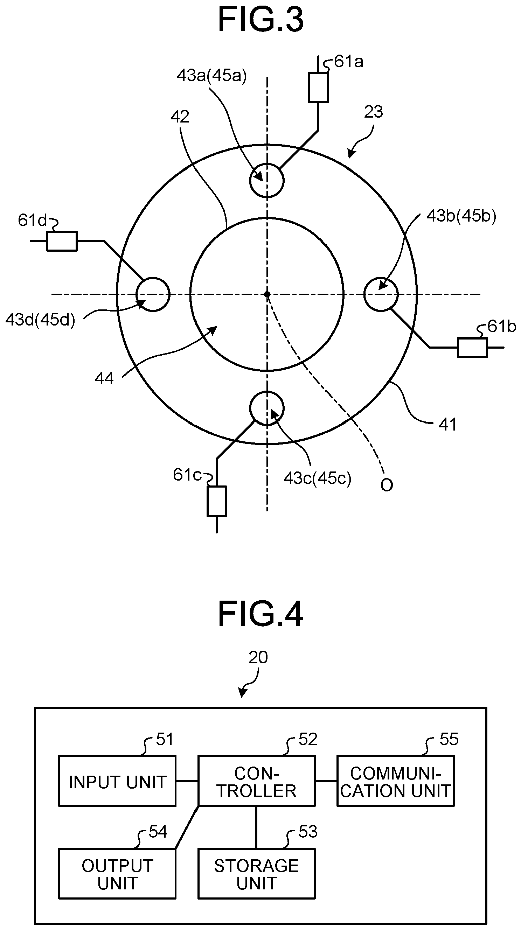

FIG. 2 is a longitudinal sectional view illustrating an example of a front end of the deposition head and FIG. 3 is a horizontal sectional view illustrating an example of the front end of the deposition head.

As illustrated in FIG. 2 and FIG. 3, the nozzle 23 is a double tube including an outer tube 41 and an inner tube 42 inserted into the outer tube 41. The outer tube 41 is a tubular member and is formed so that its diameter decreases toward a front end thereof (downward in the Z-axis direction). The inner tube 42 is inserted into the outer tube 41. The inner tube 42 is also a tubular member and has a shape in which its diameter decreases toward a front end thereof (downward in the Z-axis direction). In the nozzle 23, powder passages (powder supply unit) 43 through which powder (powder material) P passes are formed between an inner periphery of the outer tube 41 and an outer periphery of the inner tube 42. An inner peripheral face side of the inner tube 42 serves as a laser path (light irradiation unit) 44 through which a laser beam passes. Here, the main body 46 to which the nozzle 23 is attached is a double tube similarly to the nozzle 23, and the powder passages 43 and the laser path 44 are also formed in this way. In the deposition head 12, the powder passages 43 are disposed to surround the periphery of the laser path 44. In the present embodiment, the powder passages 43 serve as powder injection units that inject the powder. In the deposition head 12, powder P introduced from the powder introduction unit 35 flows through the powder passages 43 and is injected from respective nozzle injection openings (powder supply unit) 45 which are end openings between the outer tube 41 and the inner tube 42. Furthermore, a passage switching unit 61 is provided for each of the powder passages 43 connected to the powder introduction unit 35.

The deposition head 12 injects the powder P so as to have a predetermined convergence diameter at a predetermined convergence position. The convergence diameter is the diameter of a trajectory of the powder P when the diameter of the trajectory of the injected powder P is minimized. As described above, since the diameter of the nozzle 23 decreases toward the front end thereof, the deposition head 12 injects the powder P so as to converge inward in a radiation direction. That is, the deposition head 12 injects the powder P so that the trajectory of the powder P has a predetermined convergence diameter. Furthermore, the convergence position is a position where the trajectory of the injected powder P converges.

The deposition head 12 is provided with a light source 47, an optical fiber 48, and a light concentrating unit 49. The light source 47 outputs a laser beam. The optical fiber 48 guides a laser output from the light source 47 to the laser path 44. The light concentrating unit 49 is disposed in the laser path 44 and is disposed in an optical path of the laser output from the optical fiber 48. The light concentrating unit 49 concentrates a laser beam L output from the optical fiber 48. The laser beam L which is collected by the light concentrating unit 49 is output from an end of the inner tube 42. In the deposition head 12, the light concentrating unit 49 is disposed in the main body 46, but a part or the entirety of the light concentrating unit 49 may be disposed in the nozzle 23. When a part or the entirety of the light concentrating unit 49 is disposed in the nozzle 23, a focal position can be changed to a different position by the exchange of the nozzle 23.

The deposition head 12 is provided with the laser path 44, through which the laser beam L passes, at the position of a central axis O, and is provided with a plurality of the powder passages 43 outside the laser path 44. Each of the powder passages 43 is provided with the passage switching unit 61. In the present embodiment, four powder passages 43a, 43b, 43c, and 43d are provided, four nozzle injection openings 45a, 45b, 45c, and 45d are provided, and the four powder passages 43a, 43b, 43c, and 43d are provided with passage switching units 61a, 61b, 61c, and 61d, respectively. The passage switching units 61a, 61b, 61c, and 61d are configured by, for example, a device using a pump, a switching valve, or the like. The passage switching units 61a, 61b, 61c, and 61d can supply the powder P by opening the powder passages 43a, 43b, 43c, and 43d, respectively, or can stop the supply of the powder P by blocking the powder passages 43a, 43b, 43c, and 43d, respectively. Additionally, it is preferable that the four powder passages 43a, 43b, 43c, and 43d and the four nozzle injection openings 45a, 45b, 45c, and 45d be provided at equal intervals in a circumferential direction; however, they may not be provided at equal intervals. Furthermore, the number of the powder passages 43 and the number of the nozzle injection openings 45 are not limited to four, and it is sufficient if they are provided in a plural number.

The deposition head 12 injects the powder P from the powder passages 43 and outputs the laser beam L from the laser path 44. The powder P injected from the deposition head 12 enters an area irradiated with the laser beam L output from the deposition head 12, and is heated by the laser beam L at a focal point F of the laser beam L. The powder P irradiated with the laser beam L is melted and then reaches the base unit 100. The powder P that has reached the base unit 100 in the melted state is cooled and solidified. Accordingly, a formed layer is formed on the base unit 100.

Here, the deposition head 12 of the present embodiment uses the optical fiber 48 to guide the laser beam L output from the light source 47; however, the present disclosure is not limited to using the optical fiber 48 and may use another transmission member. Furthermore, the light concentrating unit 49 may be provided in one of or both the main body 46 and the nozzle 23. Since the deposition head 12 of the present embodiment can be processed effectively, the powder passages 43 injecting the powder P and the laser path 44 emitting the laser beam L are provided coaxially; however, the present disclosure is not limited thereto. The deposition head 12 may be formed so that an assembly for injecting the powder P and an assembly for emitting the laser beam L are provided as separate members. The deposition head 12 of the present embodiment irradiates the powder material with the laser beam, but may emit a light beam other than the laser beam as long as the powder material can be melted or sintered.

As illustrated in FIG. 1, the machining unit 13 is used to machine, for example, a formed layer or the like. The machining unit 13 is provided at a position facing the upper face of the bed 10 in the Z-axis direction and faces the table unit 11. The tool 22 is attached to a lower portion of the machining unit 13 in the Z-axis direction. Additionally, the machining unit 13 may be provided in a movable range of the base unit 100 using the table unit 11 above the bed 10 in the Z-axis direction. Here, the arrangement position is not limited to the position of the embodiment.

FIG. 4 is a schematic diagram illustrating a configuration of the control device 20.

As illustrated in FIG. 1, the control device 20 is electrically connected to the driving units of the components (the aforementioned bed 10, table unit 11, deposition head 12, machining unit 13, shape measurement unit 30, heating head 31, device measurement unit 32, tool exchange unit 33, nozzle exchange unit 34, powder introduction unit 35, base movement unit 36, air discharge unit 37, gas introduction unit 38, powder collection unit 39, and the like) of the three-dimensional deposition device 1, and controls the operations of the components of the three-dimensional deposition device 1. The control device 20 is installed at the outside of the three-dimensional deposition chamber 2 or the spare chamber 3. As illustrated in FIG. 4, the control device 20 includes an input unit 51, a controller 52, a storage unit 53, an output unit 54, and a communication unit 55. The input unit 51, the controller 52, the storage unit 53, the output unit 54, and the communication unit 55 are electrically connected to one another.

The input unit 51 is, for example, an operation panel. An operator inputs information or an instruction to the input unit 51. The controller 52 includes, for example, a CPU (Central Processing Unit) and a memory. The controller 52 outputs an instruction for controlling the operations of the components of the three-dimensional deposition device 1 to the components of the three-dimensional deposition device 1. Further, information and the like are input to the controller 52 from the components of the three-dimensional deposition device 1. The storage unit 53 is, for example, a storage device such as a RAM (Random Access Memory) or a ROM (Read Only Memory). The storage unit 53 stores an operation program for the three-dimensional deposition device 1 controlling the operations of the components by the controller 52 executing the program, information of the three-dimensional deposition device 1, design information of the three-dimensional object, and the like. The output unit 54 is, for example, a display. The output unit 54 displays, for example, information of the components of the three-dimensional deposition device 1. The communication unit 55 exchanges information with, for example, a communication line such as the Internet or a LAN (Local Area Network) by communicating with the communication line. Additionally, the control device 20 may include at least the controller 52 and the storage unit 53. The control device 20 may output an instruction to the components of the three-dimensional deposition device 1 if the controller 52 and the storage unit 53 are provided.

As illustrated in FIG. 2 and FIG. 3, the three-dimensional deposition device 1 of the present embodiment forms a three-dimensional object by depositing a formed layer on the object to be processed. Furthermore, the three-dimensional deposition device 1 can be used as a surface processing device that adjusts the surface roughness of the object to be processed. That is, the three-dimensional deposition device 1 can implement, as a single device, the manufacturing of the three-dimensional object and the adjustment of the surface roughness of the object to be processed.

The three-dimensional deposition device 1 used as a surface processing device includes the powder passages 43 and the nozzle injection openings 45 as powder supply units that supply the powder P toward the working surface of the object to be processed, and includes the laser path 44 as a light irradiation unit that emits the laser beam L toward a front side in a processing direction through the powder P before reaching the object to be processed and solidifies the semi-melted powder P on the working surface of the object to be processed.

The powder passages 43 and the nozzle injection openings 45 supply the powder P toward the focal point F of the laser beam L emitted from the laser path 44. The nozzle injection openings 45 supply the powder P along the direction of gravity. On the other hand, the laser path 44 irradiates the working surface of the object to be processed with the laser beam L at an irradiation angle of an acute angle. In such a case, the central axis O of the deposition head 12 can be inclined with respect to the vertical direction, and the deposition head 12 can be inclined at a predetermined angle with respect to the working surface of the object to be processed in a horizontal state. Therefore, in the deposition head 12, the irradiation angle of the laser beam L emitted from the laser path 44 is an acute angle to the working surface of the object to be processed. The injection angle of the powder P injected from the powder passages 43 is in the direction of gravity, that is, a right angle to the working surface of the object to be processed.

That is, the powder passages 43 include first powder passages indicated by 43a, 43b, and 43c that supply the powder P toward the arrival position of the laser beam L on the working surface of the object to be processed at the time of manufacturing a three-dimensional object, and a second powder passage indicated by 43d that supplies the powder P toward the laser beam L before reaching the object to be processed at the time of adjusting the surface roughness of the object to be processed. Furthermore, the laser path 44 can emit the laser beam L toward the front side in the processing direction through the powder P before reaching the object to be processed. In such a case, the injection angles of the nozzle injection openings 45a, 45b, and 45c in the first powder passages 43a, 43b, and 43c with respect to the central axis O are different from the injection angle of the nozzle injection opening 45d in the second powder passage 43d. However, the injection angles of the nozzle injection openings 45a, 45b, and 45c in the first powder passages 43a, 43b, and 43c with respect to the central axis O may be the same as the injection angle of the nozzle injection opening 45d in the second powder passage 43d, and depending on the inclination angle of the deposition head 12, the laser beam L may be emitted toward the front side in the processing direction through the powder P before reaching the object to be processed and the injection angle of the powder P injected from the powder passages 43 may be in the direction of gravity.

Furthermore, the passage switching units 61a, 61b, 61c, and 61d for switching between the first powder passages 43a, 43b, and 43c and the second powder passage 43d are provided. That is, by operating the passage switching units 61a, 61b, 61c, and 61d, it is possible to select a path for introducing the powder P from the powder passages 43a, 43b, 43c, and 43d and to inject the powder P from a desired one of the nozzle injection openings 45a, 45b, 45c, and 45d. Furthermore, at this time, by inclining the deposition head 12, it is possible to change the irradiation angle of the laser beam L emitted from the laser path 44 to the working surface of the object to be processed.

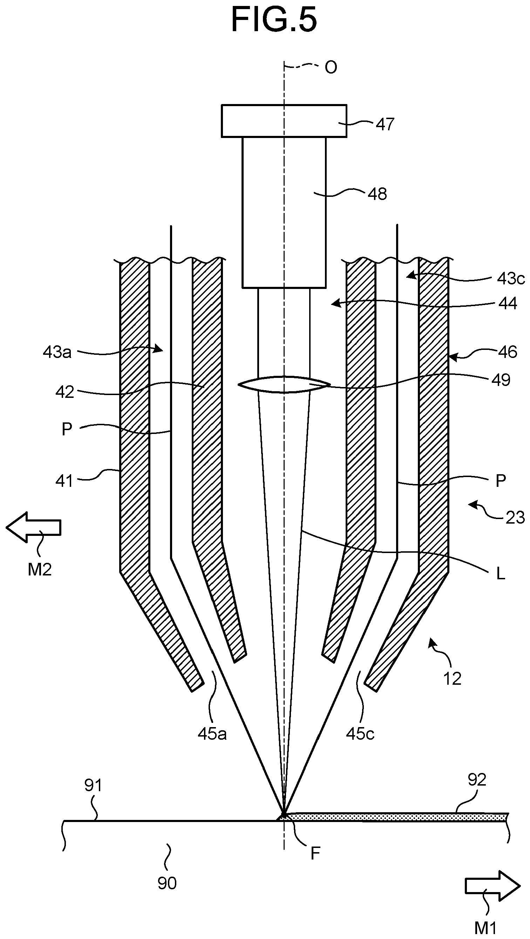

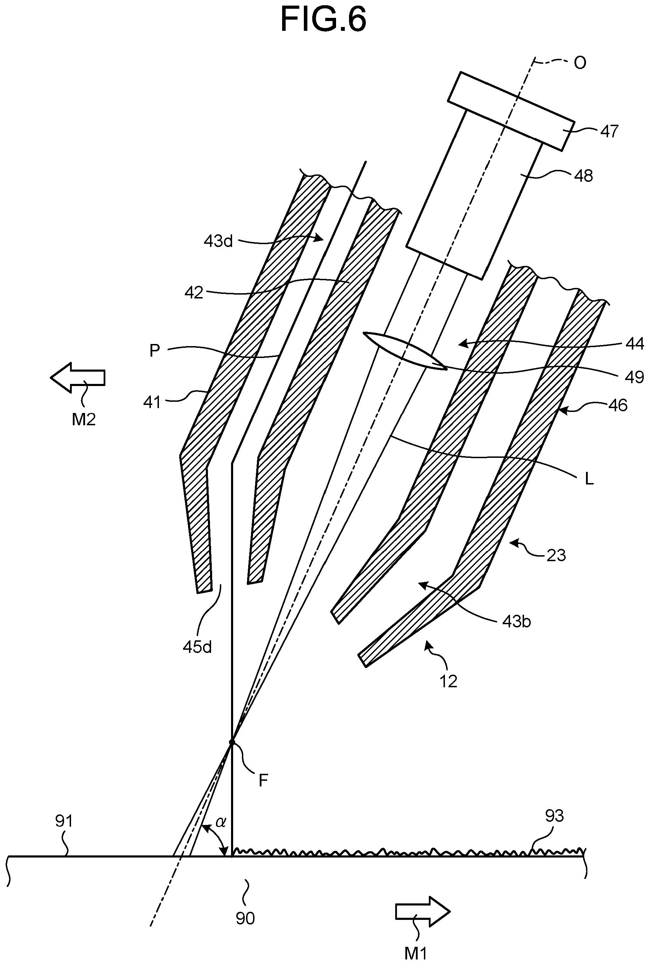

Hereinafter, a method of manufacturing a three-dimensional object and a method of adjusting the surface roughness of an object to be processed by the three-dimensional deposition device 1 will be described. FIG. 5 is an explanatory diagram illustrating a method of manufacturing a three-dimensional object by the three-dimensional device. FIG. 6 is an explanatory diagram illustrating a method of adjusting surface roughness by the three-dimensional device.

In the method of manufacturing a three-dimensional object by the three-dimensional deposition device 1, as illustrated in FIG. 1 and FIG. 5, the present embodiment will be described using a case of manufacturing a three-dimensional object on a working surface 91 of an object 90 to be processed. The object 90 to be processed is, for example, a metallic plate-shaped member, but the shape and material thereof may be arbitrarily set as long as a three-dimensional object is manufactured thereon. The object 90 to be processed is mounted on the base unit 100.

The control device 20 moves the base unit 100 so that the object 90 to be processed on the base unit 100 is disposed below the deposition head 12 in the Z-axis direction by the table unit 11. The control device 20 introduces the powder from the powder introduction unit 35 into the deposition head 12 and emits the laser beam L while injecting the powder P from the deposition head 12 along with the gas. The powder P has a predetermined convergence diameter and is injected toward the object 90 to be processed on the base unit 100. The laser beam L is emitted to the powder P with a predetermined spot diameter between the deposition head 12 and the object 90 to be processed. Here, the position of the spot diameter of the laser beam L in the Z-axis direction with respect to the position of the convergence diameter of the powder P in the Z-axis direction, and the spot diameter at the position of the convergence diameter of the powder P in the Z-axis direction can be controlled by, for example, the movement of the position of the light concentrating unit 49.

That is, the deposition head 12 injects the powder P only from the first powder passages 43a, 43b, and 43c by the operation of the passage switching units 61a, 61b, 61c, and 61d, and outputs the laser beam L from the laser path 44. The focal point F of the laser beam L from the laser path 44 is set in the vicinity of the working surface 91 of the object 90 to be processed. The powder P from the powder passages 43a, 43b, and 43c (the nozzle injection openings 45a, 45b, and 45c) is injected toward the focal point of the laser beam L. Therefore, the powder P injected from the deposition head 12 is heated by the laser beam L at the focal point F of the laser beam L on the working surface 91 of the object 90 to be processed, and forms a molten pool. The powder P irradiated with the laser beam L is melted in the vicinity of the working surface 91 of the object 90 to be processed, and then reaches the working surface 91 of the object 90 to be processed. The powder P that has reached the working surface 91 of the object 90 to be processed in the melted state is then cooled and solidified. Accordingly, a formed layer 92 is formed on the working surface 91 of the object 90 to be processed.

The control device 20 irradiates the working surface 91 of the object 90 to be processed with the laser beam L from the deposition head 12 and injects the powder P while moving the object 90 to be processed in a predetermined movement direction M1 by the table unit 11. Therefore, the formed layer 92 that is continuous to the working surface 91 of the object 90 is formed. In such a case, the formation direction by the three-dimensional deposition device is M2. The three-dimensional deposition device 1 repeats the formation of such a formed layer 92, thereby manufacturing a three-dimensional object in which a plurality of formed layers are integrally deposited.

In a method of adjusting surface roughness by the three-dimensional deposition device 1, as illustrated in FIG. 1 and FIG. 6, the present embodiment will be described using a case of adjusting the surface roughness of the working surface 91 of the object 90 to be processed.

The control device 20 moves the base unit 100 by the table unit 11 so that the object 90 to be processed on the base unit 100 is disposed below the deposition head 12 in the Z-axis direction. Then, the control device 20 allows the working surface 91 of the object 90 to be processed to be in a horizontal direction, inclines the central axis O of the deposition head 12 with respect to the working surface 91 of the object 90 to be processed, and sets an irradiation angle α of the laser beam L to an acute angle. In such a case, the irradiation angle α of the laser beam L may be set to an acute angle by inclining the base unit 100 with respect to the deposition head 12. The control device 20 introduces the powder to the deposition head 12 from the powder introduction unit 35, and emits the laser beam L while injecting the powder P from the deposition head 12 along with the gas. The powder P has a predetermined convergence diameter and is injected toward the object 90 to be processed on the base unit 100. The laser beam L is emitted to the powder P with a predetermined spot diameter between the deposition head 12 and the object 90 to be processed.

That is, the deposition head 12 injects the powder P only from the second powder passage 43d (the nozzle injection opening 45d) by the operation of the passage switching units 61a, 61b, 61c, and 61d, and outputs the laser beam L from the laser path 44. The focal point of the laser beam L from the laser path 44 is set at a position separated from the working surface 91 of the object 90 to be processed by a predetermined distance, and the powder P from the powder passage 43d is injected toward the focal point of the laser beam L. Therefore, the powder P injected from the deposition head 12 moves along the direction of gravity, and is heated by the laser beam L at the focal point F of the laser beam L separated from the working surface 91 of the object 90 to be processed. The powder P irradiated with the laser beam L is melted or semi-melted at the position separated from the working surface 91 of the object 90 to be processed, and then reaches the working surface 91 of the object 90 to be processed. The melted or semi-melted powder P is cooled at a position between the focal position of the laser beam L and the object 90 to be processed, or at the arrival position on the working surface 91 of the object 90 to be processed, and is solidified on and adheres to the working surface 91 of the object 90 to be processed. Accordingly, a surface roughness adjusting layer 93 is formed on the working surface 91 of the object 90 to be processed.

Since the powder P injected from the deposition head 12 is heated only at the focal point F of the laser beam L, a part of the powder P is completely melted and is solidified on and adheres to the working surface 91, but another part of the powder P may not be completely melted but may be semi-melted. The semi-melted state is a state in which only a granular outer peripheral surface of the powder is melted and the inside is not melted. Therefore, when the powder P in the semi-melted state reaches the working surface 91 of the object 90 to be processed, it adheres to the working surface 91 of the object 90 to be processed by the melted part. However, since the powder P itself is not completely melted, the working surface 91 of the object 90 to be processed is adjusted so that an uneven shape having a rough texture, that is, the surface roughness is increased by a large number of granules constituting the powder P. Here, the "surface roughness is increased" includes, for example, a surface shape in which arithmetic average roughness Sa is 50 µm or more; however, the present disclosure is not limited thereto.

The control device 20 irradiates the working surface 91 of the object 90 to be processed with the laser beam L from the deposition head 12 and injects the powder P while moving the object 90 to be processed in the predetermined movement direction M1 by the table unit 11. Therefore, the surface roughness adjusting layer 93 that is continuous to the working surface 91 of the object 90 is processed. In such a case, the processing direction by the three-dimensional deposition device is M2. Therefore, the laser beam L emitted from the deposition head 12 heats the powder P at the focal point F thereof, and then reaches the working surface 91 of the object 90 to be processed on the front side in the processing direction M2 from the position where the powder P in the semi-melted state adheres to the working surface 91 of the object 90 to be processed. At this time, since the irradiation angle α of the laser beam L is not a right angle but an acute angle, the laser beam L is easily reflected from the working surface 91 of the object 90 to be processed, and the working surface 91 itself of the object 90 to be processed is suppressed from being heated. Here, it is preferable that the irradiation angle α be equal to or smaller than 60°, for example.

Additionally, in the above description, the surface roughness adjusting layer 93 of one layer is formed by performing one-time surface roughness adjusting treatment on the working surface 91 of the object 90 to be processed; however, a plurality of surface roughness adjusting layers 93 may be deposited by performing the surface roughness adjusting treatment a plurality of number of times.

As described above, the surface processing device of the present embodiment includes the powder passages (powder supply unit) 43 that supply the powder P toward the working surface 91 of the object 90 to be processed, and the laser path (light irradiation unit) 44 that irradiates the powder P before reaching the object 90 to be processed with the laser beam L, and offsets the irradiation position of the laser beam L and the injection position of the powder P on the working surface 91.

Therefore, the surface processing device supplies the powder P toward the working surface 91 of the object 90 to be processed from the powder passage 43d and emits the laser beam L from the laser path 44 to the powder P before reaching the object 90 to be processed. At this time, the surface processing device offsets the irradiation position of the laser beam L and the injection position of the powder P on the working surface 91. As a consequence, the processed part (for example, the formed layer 92, the surface roughness adjusting layer 93, and the like) of the object 90 to be processed is not irradiated with the laser beam L, so that a material is added to the object 90 to be processed by suppressing thermal influence on the working surface 91 of the object 90 to be processed, so that it is possible to satisfactorily adjust the surface roughness of the object 90 to be processed.

The surface processing device of the present embodiment solidifies the powder P semi-melted by the laser beam L, on the working surface 91 of the object 90 to be processed. Therefore, the surface processing device supplies the powder P toward the working surface 91 of the object 90 to be processed from the powder passage 43d and emits the laser beam L from the laser path 44 to the powder P before reaching the object 90 to be processed. By so doing, the powder P semi-melted by the laser beam L is solidified on the working surface 91 of the object 90 to be processed, and a material is added to the object 90 to be processed by suppressing thermal influence on the working surface 91 of the object 90 to be processed, so that it is possible to satisfactorily adjust the surface roughness of the object 90 to be processed.

The surface processing device of the present embodiment supplies the powder P from the powder passages 43 toward the focal point F of the laser beam L emitted from the laser path 44, and the focal point F is separated from the working surface 91 by a predetermined distance. Therefore, the powder P can be properly semi-melted by the laser beam L, and the semi-melted powder P can adhere to and be solidified on the working surface 91 of the object 90 to be processed.

The surface processing device of the present embodiment supplies the powder P from the powder passages 43 along the direction of gravity. Therefore, the powder P semi-melted by the laser beam L can adhere to a predetermined position on the working surface 91 of the object 90 to be processed, and the processing accuracy can be improved.

The surface processing device of the present embodiment emits the laser beam L from the laser path 44 toward the front side in the processing direction M2 at an irradiation angle α of an acute angle with respect to the working surface 91 of the object 90 to be processed. Therefore, since the laser beam L is emitted from the laser path 44 to the working surface 91 of the object 90 to be processed at the irradiation angle α of an acute angle, not a right angle, the laser beam L is easily reflected from the working surface 91 of the object 90 to be processed, so that it is possible to reduce thermal influence on the working surface 91 of the object 90 to be processed.

Furthermore, the surface processing method of the present embodiment includes a step of supplying the powder P toward the working surface 91 of the object 90 to be processed, a step of irradiating the powder P before reaching the object 90 to be processed with the laser beam L, and a step of offsetting an irradiation position of the laser beam L and an injection position of the powder P on the working surface 91. Therefore, the processed part (for example, the formed layer 92, the surface roughness adjusting layer 93, and the like) of the object 90 to be processed is not irradiated with the laser beam L, so that a material is added to the object 90 to be processed by suppressing thermal influence on the working surface 91 of the object 90 to be processed, so that it is possible to satisfactorily adjust the surface roughness of the object 90 to be processed.

Furthermore, the three-dimensional deposition device of the present embodiment includes the powder passages (powder supply unit) 43 that supply the powder P toward the working surface 91 of the object 90 to be processed, and the laser path (light irradiation unit) 44 that irradiates the powder P with the laser beam L and forms the formed layer 92 by sintering or melting and solidifying at least a part of the powder P irradiated with the laser beam L. The powder passages 43 include the first powder passages 43a, 43b, and 43c that supply the powder P toward the arrival position of the laser beam L on the working surface 91 of the object 90 to be processed at the time of manufacturing a three-dimensional object, and the second powder passage 43d that supplies the powder P toward the laser beam L before reaching the object 90 to be processed at the time of adjusting the surface roughness of an object to be processed. Consequently, it is possible to emit the laser beam L from the laser path 44 toward the front side in the processing direction M2 through the powder P before reaching the object 90 to be processed.

Therefore, when the powder P is supplied from the first powder passages 43a, 43b, and 43c toward the working surface 91 of the object 90 to be processed and the laser beam L is emitted from the laser path 44 to the arrival position of the powder P on the working surface 91 of the object 90 to be processed, it is possible to form the formed layer 92 by sintering or melting and solidifying at least a part of the powder P irradiated with the laser beam L. On the other hand, when the powder P is supplied from the second powder passage 43d toward the laser beam L before reaching the object 90 to be processed, the powder P irradiated with the laser beam L is semi-melted and the semi-melted powder P adheres to and is solidified on the working surface 91 of the object 90 to be processed, so that it is possible to form the surface roughness adjusting layer 93. As a consequence, the processed part of the object 90 to be processed is not irradiated with the laser beam L, so that it is possible to suppress thermal influence on the working surface 91 of the object 90 to be processed.

The three-dimensional deposition device of the present embodiment is provided with the passage switching units 61a, 61b, 61c, and 61d for switching between the first powder passages 43a, 43b, and 43c and the second powder passage 43d as the powder passages 43 that supply the powder P. Therefore, it is possible to change the injection position of the powder P by switching the first powder passages 43a, 43b, and 43c and the second powder passage 43d by the passage switching units 61a, 61b, 61c, and 61d, and to easily select the three-dimensional deposition process and the surface processing process.

The three-dimensional deposition device of the present embodiment can change the irradiation angle α of the laser beam L emitted from the laser path 44 to the working surface 91 of the object 90 to be processed. Therefore, it is possible to easily change the angle of the laser beam L emitted to the working surface 91 of the object 90 to be processed, and a part of the laser beam L is reflected from the working surface 91 of the object 90 to be processed, so that it is possible to reduce thermal influence on the working surface 91 of the object 90 to be processed.

Additionally, in the aforementioned embodiment, the powder supply unit is disposed outside the light irradiation unit to form an integrated deposition head; however, a separate powder supply unit may be disposed adjacent to the light irradiation unit.

Furthermore, in the aforementioned embodiment, the powder material injected by the powder supply unit is a metallic powder material; however, a non-metallic powder material such as a resin powder material may be used. Furthermore, the laser beam is used as a light beam; however, an electron beam or the like may be used.

Furthermore, in the aforementioned embodiment, the surface processing device of the present disclosure has been described as the three-dimensional deposition device; however, a device having only the function of the surface processing device may be configured. For example, a processing head for the surface processing device and a deposition head for the three-dimensional deposition device may be prepared and configured to be interchangeable.

Furthermore, the surface processing device and method of the present disclosure are not limited to the adjustment of the surface roughness of an object to be processed, and may be used for the purpose of adding a material to a working surface of the object to be processed. According to the present disclosure, it is also possible to add a material that minimizes thermal influence on the object to be processed.

### Reference Signs List

- 1: three-dimensional deposition device

- 2: three-dimensional deposition chamber
- 3: spare chamber
- 4: deposition head accommodation chamber
- 4a, 5a: Z-axis slide unit
- 5: machining unit accommodation chamber
- 6, 7: door
- 10: bed
- 11: table unit
- 12: deposition head
- 13: machining unit
- 15: Y-axis slide unit
- 16: X-axis slide unit
- 17: rotation table unit
- 17a: fixing base
- 17b: rotation table
- 17c: inclination table
- 17d: rotation table
- 18, 19: bellows
- 20: control device
- 22: tool
- 23: nozzle
- 24: front end
- 25: air discharge unit
- 30: shape measurement unit
- 31: heating head
- 32: device measurement unit
- 33: tool exchange unit
- 34: nozzle exchange unit
- 35: powder introduction unit
- 36: base movement unit
- 37: air discharge unit
- 38: gas introduction unit
- 39: powder collection unit
- 41: outer tube
- 42: inner tube
- 43, 43a, 43b, 43c, 43d: powder passage (powder supply unit)
- 44: laser path (light irradiation unit)
- 45, 45a, 45b, 45c, 45d: nozzle injection opening (powder supply unit)
- 46: main body
- 47: light source
- 48: optical fiber
- 49: light concentrating unit
- 51: input unit
- 52: controller
- 53: storage unit
- 54: output unit
- 55: communication unit
- 90: object to be processed
- 61, 61a, 61b, 61c, 61d: passage switching unit
- 91: working surface
- 92: formed layer
- 93: surface roughness adjusting layer
- 100: base unit
- 102, 104, 106, 108: arrow
- 110: rotation shaft
- α: irradiation angle
- f: focal point
- 1: laser beam (light beam)
- M1: movement direction
- M2: processing direction
- O: central axis
- P: powder

## Claims

1. A surface processing device that adds a material to an object to be processed, the surface processing device comprising:
a powder supply unit that supplies a powder material toward a working surface of the object to be processed; and
a light irradiation unit that irradiates the powder material before reaching the object to be processed with a light beam, wherein
an irradiation position of the light beam and an injection position of the powder material on the working surface are offset.

2. The surface processing device according to claim 1, wherein the light irradiation unit solidifies the powder material semi-melted by the light beam, on the working surface of the object to be processed.

3. The surface processing device according to claim 1 or 2, wherein the powder supply unit supplies the powder material toward a focal point of the light beam emitted from the light irradiation unit, and the focal point is separated from the working surface by a predetermined distance.

4. The surface processing device according to any one of claims 1 to 3, wherein the powder supply unit supplies the powder material along a direction of gravity.

5. The surface processing device according to any one of claims 1 to 4, wherein the light irradiation unit emits the light beam toward a front side in a processing direction at an inclination angle of an acute angle with respect to the working surface of the object to be processed.

6. A surface processing method of adding a material to an object to be processed, the surface processing method comprising:
a step of supplying a powder material toward a working surface of the object to be processed;
a step of irradiating the powder material before reaching the object to be processed with a light beam; and
a step of offsetting an irradiation position of the light beam and an injection position of the powder material on the working surface.

7. A three-dimensional deposition device that forms a three-dimensional object by depositing a formed layer on an object to be processed, the three-dimensional deposition device comprising:
a powder supply unit that supplies a powder material toward a working surface of the object to be processed; and
a light irradiation unit that irradiates the powder material with a light beam and forms the formed layer by sintering or melting and solidifying at least a part of the powder material irradiated with the light beam, wherein
the powder supply unit includes a first powder passage that supplies the powder material toward an arrival position of the light beam on the working surface of the object to be processed, and a second powder passage that supplies the powder material toward the light beam before reaching the object to be processed, and
the light irradiation unit is able to emit the light beam toward a front side in a processing direction through the powder material before reaching the object to be processed.

8. The three-dimensional deposition device according to claim 7, wherein the powder supply unit includes a passage switching unit for switching between the first powder passage and the second powder passage.

9. The three-dimensional deposition device according to claim 7 or 8, wherein an irradiation angle of the light beam emitted from the light irradiation unit to the working surface of the object to be processed is variable.
